# EUROPÄISCHE PATENTANMELDUNG

(11) **EP 0 567 888 A2**
(43) Veröffentlichungstag der Anmeldung: **03.11.1993**
(21) Anmeldenummer: 93106334.1
(22) Anmeldetag: 20.04.1993
(51) Int. Cl.: H04B 7/26, H04B 7/06

(54) **Kommunikationssystem zur Datenübertragung von einem bewegten Fahrzeug auf eine ortsfeste Bake**

(30) Priorität: 28.04.1992 DE 4213879
(71) Anmelder: ROBERT BOSCH GMBH, 70442 Stuttgart (DE)
(72) Erfinder: Bode, Friedrich-Wilhelm, Dipl.-Ing., W-3054 Apelern (DE); Grabow, Wilhelm, Dr., Dipl.-Ing., W-3204 Nordstemmen (DE)

(57) **Zusammenfassung**

Bei einem Kommunikationssystem zur Datenübertragung von einem bewegten Fahrzeug auf eine ortsfeste Bake (1), die eine Sende- und Empfangseinrichtung aufweist, bei dem ein Signal von der Bake (1) abgestrahlt und von einer Antenne (5, 5') eines Bordgeräts (4) des Fahrzeugs empfangen und nach einer Modulation mit einem Datensignal wieder zur Bake (1) zurückgesandt wird, wo die Daten aus dem zurückgesandten Signal extrahiert werden, wird die Übertragungssicherheit für die Daten dadurch erhöht, daß das Bordgerät (4) wenigstens zwei Modulatoren (6, 6') aufweist, mit denen unabhängig voneinander das empfangene Signal mit dem Datensignal modulierbar und in unterschiedlicher Weise zurückgendbar ist. Die verschiedene Übersendung der unabhängig voneinander modulierten Signale kann durch eine räumliche Trennung der Antennen (5, 5') und/oder durch eine unterschiedliche Polarisation der abgestrahlten Signale erfolgen.

## Beschreibung

Die Erfindung betrifft ein Kommunikationssystem zur Datenübertragung von einem bewegten Fahrzeug auf eine ortsfeste Bake, die eine Sende- und Empfangseinrichtung aufweist, bei dem ein Signal von der Bake abgestrahlt und von einer Antenne eines Bordgeräts des Fahrzeugs empfangen und nach einer Modulation mit einem Datensignal wieder zur Bake zurückgesandt wird, wo die Daten aus dem zurückgesandten Signal extrahiert werden.

Insbesondere für die Verkehrsleittechnik ist ein System vorgesehen, bei dem eine Datenübertragung von einem an einer ortsfesten Bake vorbeifahrenden Fahrzeug zu dieser Bake hin erfolgt. Da es nicht sinnvoll ist, die Fahrzeuge selbst mit einem Sender auszustatten, ist es vorgesehen, Trägersignale von der Bake kontinuierlich aussenden zu lassen, die von dem vorüberfahrenden Fahrzeug empfangen und mit einem Datensignal moduliert werden. Die dafür in Frage kommenden Trägerfrequenzen liegen im Mikrowellenbereich (z. B. 5,8 GHz). Das Trägersignal wird von der Antenne des vorüberfahrenden Fahrzeugs empfangen und mit einem im Fahrzeug bereitgestellten Datensignal moduliert.

Dabei ist es bekannt, die Modulation am Fußpunkt der Antenne mit für die beiden logischen Zustände des Datensignals vorgesehenen verschiedenen Frequenzen vorzunehmen und das Trägersignal moduliert von der Antenne zu reflektieren, so daß im Fahrzeug keine eigene Sendeleistung bereitgestellt werden muß. Die dabei verwendeten Modulationsverfahren sind regelmäßig Frequenzkodierungen, durch die die Trägerfrequenz in Abhängigkeit von logisch "1" um eine andere Frequenz verschoben wird als in Abhängigkeit von logisch "0" ("frequency shift keying").

Während die ortsfesten Baken als Basisinstallationen mit dem nötigen Aufwand erstellt werden können, muß es ein Bestreben sein, die Bordgeräte der Fahrzeuge möglichst preiswert auszubilden. Dies gilt auch für die Antennen, die in Verbindung mit dem Bordgerät benutzt werden. Dem steht entgegen, daß die Datenübermittlung in dem beschriebenen System erheblichen Störeinflüssen ausgesetzt ist, die durch andere Fahrzeuge, Störungen durch Motor und Zündsystem des Fahrzeugs usw. verursacht werden.

Das der Erfindung zugrundeliegende Problem besteht somit darin, daß einerseits eine möglichst kostengünstige Lösung für die Bordgeräte angestrebt wird, andererseits eine möglichst hohe Übertragungssicherheit für die Daten gewährleistet sein muß, damit die Aufgabe des Systems, nämlich Verkehrsleitinformationen zu erstellen, erfüllt werden kann.

Ausgehend von dieser Problemstellung ist das Kommunikationssystem der eingangs erwähnten Art dadurch gekennzeichnet, daß das Bordgerät wenigstens zwei Modulatoren aufweist, mit denen unabhängig voneinander das empfangene Signal mit dem Datensignal modulierbar und in unterschiedlicher Weise zurücksendbar ist.

In dem erfindungsgemäßen Kommunikationssystem wird die Datenübertragungssicherheit für die Übertragung vom Bordgerät zur Bake dadurch erhöht, daß zwei Modulationen unabhängig voneinander erfolgen und daß die modulierten Signale in unterschiedlicher Weise von dem Fahrzeug zur Bake zurückgesandt werden. Die unterschiedliche Zurücksendung der modulierten Signale kann mit Hilfe von zwei räumlich voneinander getrennten Antennen erfolgen, die jeweils mit einem Modulator verbunden sind, Durch die Zurücksendung der empfangenen Signale in räumlicher Trennung voneinander kann ein Teil der lokalen Störeinflüsse ausgeschaltet werden.

In einer alternativ oder zusätzlich dazu bestehenden Möglichkeit sind die mit den Modulatoren verbundenen Antennen für eine polarisierte Abstrahlung der modulierten Signale für unterschiedliche Polarisationen ausgelegt. Die unterschiedliche Rücksendung der empfangenen Signale kann somit allein durch verschiedene Polarisationen der rückgesandten Signale realisiert sein oder durch eine Kombination der unterschiedlichen Antennenorte mit unterschiedlichen Polarisationen. Die rückgesandten Signale sind zweckmäßigerweise bei einer linearen Polarisation orthogonal zueinander polarisiert, bei einer zirkularen Polarisation entgegengesetzt drehend. Vorzugsweise werden die zirkularen Polarisationen verwendet, da diese gegenüber bestimmten Echoeinflüssen (durch Reflexionen) unanfällig sind.

Unter Einbeziehung der Polarisation der übersandten Signale sind zahlreiche Kombinationsmöglichkeiten gegeben, wenn auch die Bake polarisierte elektromagnetische Wellen für unterschiedliche Polarisationen ausstrahlt, die vorzugsweise mit Signalen unterschiedlicher Frequenzen gespeist werden. Diese Signale können in entsprechender Polarisation von zwei Antennen des Bordgeräts in modulierter Form zurückgesandt werden.

In allen Fällen ist es zweckmäßig, wenn das Bordgerät für eine modulierte Reflexion der von der Bake empfangenen Signale ausgelegt ist, also keine eigene Sendeleistung benötigt. Eine solche Modulation kann in an sich bekannter Weise dadurch erfolgen, daß die Fußpunktreaktanz der Antenne mit einer Modulationsfrequenz verändert wird, wobei die Modulationsfrequenz für logisch "1" verschieden ist von der Modulationsfrequenz für logisch "0".

Eine Steigerung der Übertragungssicherheit wird dadurch gewährleistet, daß die Modulatoren als Phasenmodulatoren ausgebildet sind, an denen jeweils das empfangene Signal und das Datensignal ansteht. Mit dem modulierenden Datensignal wird die Phase jeweils variiert, wobei die Geschwindigkeit der Phasenvariation für logisch "1" und logisch "0" unterschiedlich ist.

In allen Fällen sind die Modulatoren vorzugsweise Einseitenbandmodulatoren. In diesem Fall können die unterschiedlich modulierten Signale als (unterschiedliche) Seitenbänder zu derselben Trägerfrequenz erzeugt werden.

Befinden sich im Empfangsbereich eines Fahrzeugs mehrere Baken, wird es zweckmäßig sein, diese auf unterschiedlichen Frequenzen senden zu lassen, wobei das Fahrzeug mit zwei Antennen Daten auf beide Baken in jeweils zwei verschiedenen Weisen zurücksenden kann, wobei dann für jede Antenne zwei Einseitenbandmodulatoren erforderlich sind.

Eine einfache Ausführungsform eines Einseitenbandmodulators besteht aus einer Serienschaltung, einer λ/8- und einer λ/4-Verzögerungsschaltung an dem Fußpunkt der zugehörigen Antenne, wobei parallel zu der λ/8-Verzögerungsschaltung eine erste Diode und parallel zu der λ/4-Verzögerungsschaltung eine zweite Diode in Serie zur ersten Diode geschaltet ist und beiden Dioden mit jeweils einem Modulationssignal in den leitenden und sperrenden Zustand schaltbar sind. Erfindungsgemäß sind wenigstens zwei solcher Einseitenbandmodulatoren in dem Bordgerät vorhanden.

In weiterer Ausgestaltung der Erfindung können anstelle der erwähnten Frequenzmodulation auch andere kodierende Signale, wie beispielsweise eine Pulscodemodulation, verwendet werden.

Die Erfindung wird im folgenden anhand eines in der Zeichnung dargestellten Ausführungsbeispiels näher erläutert. Es zeigen:
- Figur 1 -: eine schematische Darstellung eines Kommunikationssystems bestehend aus einer Bake und einem Fahrzeug mit zwei Antennen, an die ein phasendrehender Einseitenbandmodulator angeschlossen ist
- Figur 2 -: ein Impulsdiagramm für die den Phasenmodulator gemäß Figur 1 ansteuernden Taktsignale i₁(t) und i₂(t)
- Figur 3 -: ein Phasendiagramm für die sich aus dem Impulsdiagramm gemäß Figur 2 ergebenden Phasenlagen
- Figur 4 -: ein Frequenzdiagramm zur Darstellung der logischen Zustände "0" und "1".

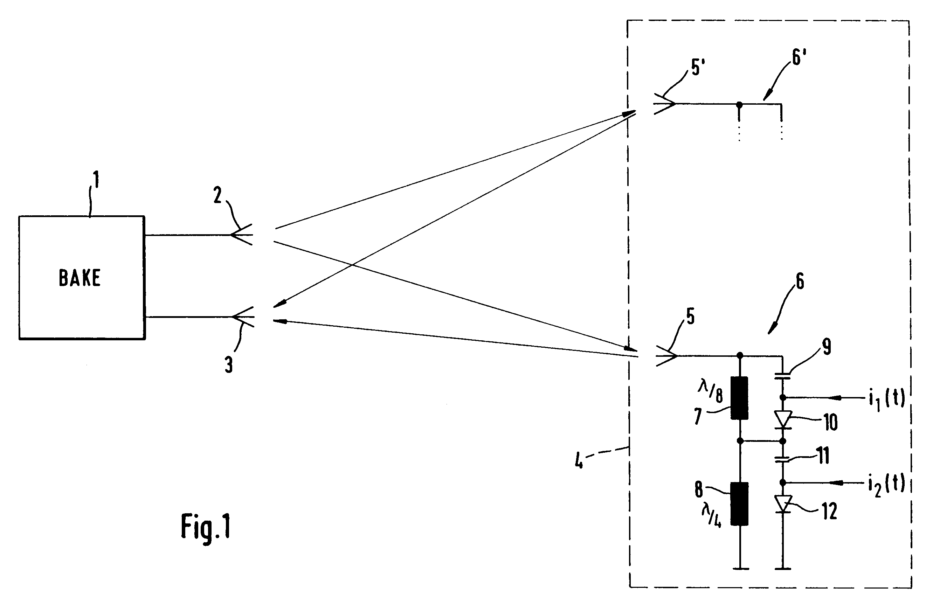

Figur 1 läßt eine ortsfeste Bake 1 mit einer Sendeantenne 2 und einer Empfangsantenne 3 erkennen. Die Sendeantenne strahlt ein kontinuierliches Signal mit einer festen Frequenz aus. Dieses Signal wird vom Bordgerät 4 eines Fahrzeugs mit zwei Antennen 5, 5' empfangen, die an verschiedenen Orten des Fahrzeugs angeordnet sind. An die Antennen ist jeweils ein Einseitenbandmodulator 6, 6' angeschlossen. In dem dargestellten Ausführungsbeispiel besteht der Einseitenbandmodulator 6 aus einer in den Fußpunkt der Antenne 5 gegen Masse geschalteten Serienschaltung einer λ/8-Verzögerungsleitung 7 mit einer λ/4-Verzögerungsleitung 8. Die λ/8-Verzögerungsleitung 7 ist durch die Serienschaltung eines Blockkondensators 9 mit einer in Flußrichtung geschalteten Diode 10 überbrückt, während die λ/4-Verzögerungsschaltung 8 durch eine entsprechende Serienschaltung eines Blockkondensators 11 und einer in Flußrichtung geschalteten Diode 12 überbrückbar ist. Demgemäß sind die Verbindungspunkte zwischen den Verzögerungsschaltungen 7, 8 einerseits und zwischen der Diode 10 und dem Blockkondensator 11 andererseits miteinander verbunden.

Modulationssignale i₁(t) und i₂(t) werden jeweils zwischen Blockkondensator 9 und Diode 10 bzw. Blockkondensator 11 und Diode 12 eingekoppelt.

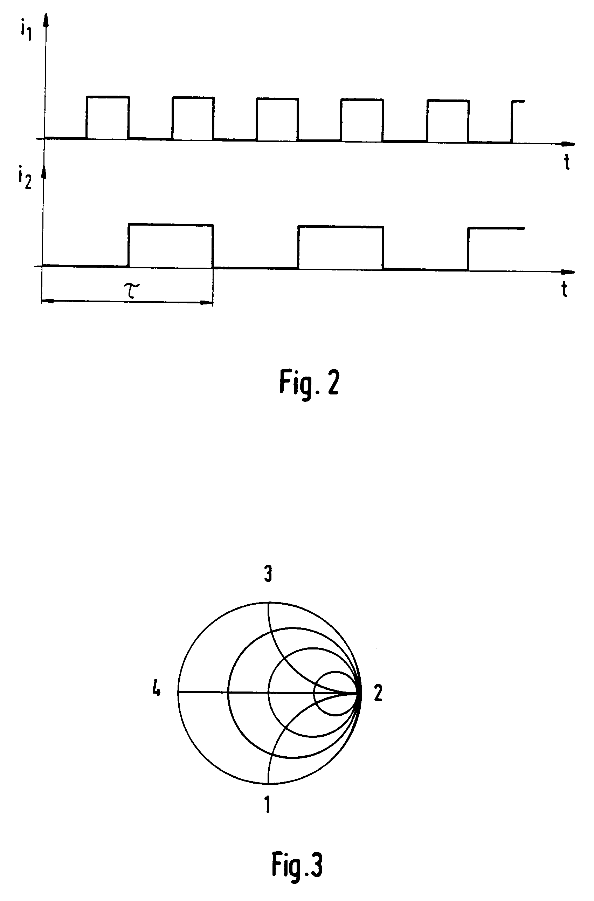

In dem dargestellten Ausführungsbeispiel haben die Modulationssignale i₁(t) und i₂(t) die Funktion, einerseits eine datenabhängige Modulation vorzunehmen, andererseits für eine Phasenmodulation zu sorgen. Hierzu haben die Modulationssignale i₁(t) und i₂(t) die in Figur 2 dargestellten Impulsverläufe, wobei Impuls und Impulslücke jeweils die gleiche Breite aufweisen und die Breite bei dem Signal i₁(t) halb so groß ist wie die bei dem Signal i₂(t). Für eine Periode τ ergeben sich vier verschiedene Konstellationen, die in Figur 2 angedeutet sind. In der ersten Konstellation sind beide Signale "low". Daraus ergibt sich, daß beide Dioden nicht leiten, so daß die beiden Verzögerungsschaltungen 7, 8 nacheinander wirksam sind, woraus sich eine Phasenverschiebung um 3/8 λ ergibt. Dieser Zustand ist im Phasendiagramm der Figur 3 mit 1 bezeichnet.

In der Konstellation 2 ist durch das Signal i₁(t) die obere Diode 10 durchgeschaltet, so daß die λ/8-Verzögerungsschaltung 7 überbrückt ist. Wirksam ist somit nur die λ/4-Verzögerungsschaltung 8, die zu einer Phasenverschiebung um λ/4 führt. Dieser Zustand ist in Figur 3 mit 2 bezeichnet.

In der Konstellation 3 der Figur 2 ist die Diode 10 wegen des "low"-Zustands des Signals i₁(t) nichtleitend, hingegen die untere Diode 12 leitend. Somit resultiert eine λ/8-Phasenverschiebung, die in Figur 3 im Punkt 3 charakterisiert ist.

Im Zustand 4 sind beide Dioden 10, 12 durchgeschaltet, so daß der Kurzschlußfall mit einer Phasenverschiebung 0 gegeben ist. Dieser ist in Figur 3 mit 4 bezeichnet. Somit ergibt sich, daß während einer Periode τ die Phasenverschiebungen von 0 über 3/8 λ, 2/8 λ, 1/8λ und wieder 0 durchlaufen werden, also im Phasendiagramm der Figur 3 einmal die äußere Kreisbahn durchlaufen wird.

Für den Zustand logisch "0" wird nun die Periode τ größer gewählt als für den Zustand logisch "1". Somit ergibt sich für den Zustand logisch "1" eine höhere Frequenz, mit der das von der Bake auf der Antenne 5 einfallende Signal moduliert wird.

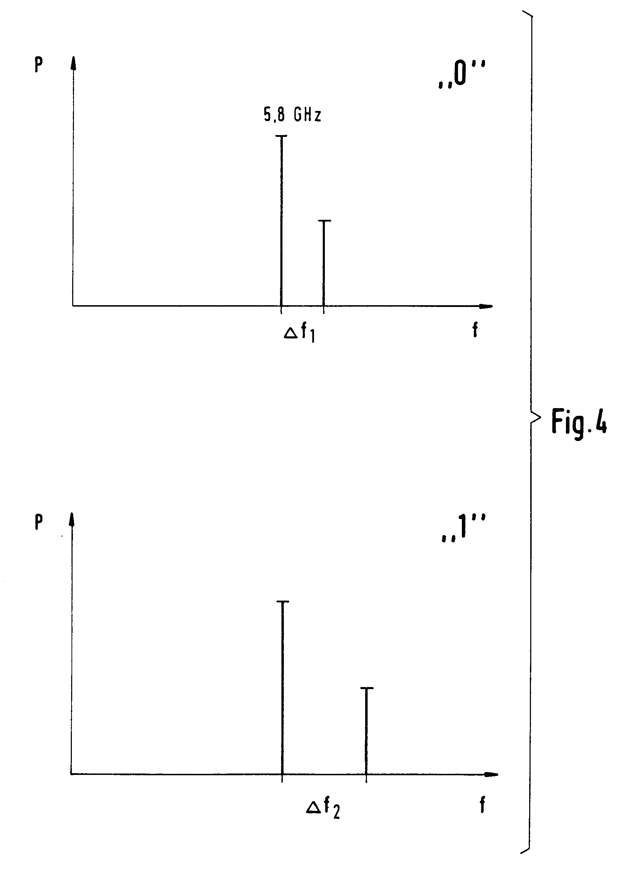

Figur 4 verdeutlicht, daß -abgesehen von der Phasenmodulationdas Signal "0" durch eine andere Lage des Seitenbands charakterisiert ist als der Zustand "1".

Die erfindungsgemäß mögliche Reflexion der Wellen von den Antennen 5, 5' in polarisierter, vorzugsweise zirkular polarisierter Form entsteht durch die Verwendung geeigneter Antennen 5, 5'. Die hierfür geeigneten Antennenformen sind allgemein bekannt und bedürfen hier keiner näheren Erläuterung.

## Patentansprüche

1. Kommunikationssystem zur Datenübertragung von einem bewegten Fahrzeug auf eine ortsfeste Bake (1), die eine Sende- und Empfangseinrichtung aufweist, bei dem ein Signal von der Bake (1) abgestrahlt und von einer Antenne (5, 5') eines Bordgeräts (4) des Fahrzeugs empfangen und nach einer Modulation mit einem Datensignal wieder zur Bake (1) zurückgesandt wird, wo die Daten aus dem zurückgesandten Signal extrahiert werden, **dadurch gekennzeichnet, daß** das Bordgerät (4) wenigstens zwei Modulatoren (6, 6') aufweist, mit denen unabhängig voneinander das empfangene Signal mit dem Datensignal modulierbar und in unterschiedlicher Weise zurücksendbar ist.

2. Kommunikationssystem nach Anspruch 1, gekennzeichnet durch zwei räumlich voneinander getrennte Antennen (5, 5'), die jeweils mit einem Modulator (6, 6') verbunden sind.

3. Kommunikationssystem nach Anspruch 1 oder 2, dadurch gekennzeichnet, daß die mit den Modulatoren (6, 6') verbundenen Antennen (5, 5') für unterschiedliche Polarisationen ausgelegt sind.

4. Kommunikationssystem nach einem der Ansprüche 1 bis 3, dadurch gekennzeichnet, daß die Bake (1) zwei abstrahlende Antennen (2) für unterschiedliche Polarisationen aufweist, die mit Signalen unterschiedlicher Frequenzen gespeist werden.

5. Kommunikationssystem nach einem der Ansprüche 1 bis 4, dadurch gekennzeichnet, daß das Bordgerät (4) für eine modulierte Reflexion der von der Bake (1) empfangenen Signale ausgelegt ist.

6. Kommunikationssystem nach einem der Ansprüche 1 bis 5, dadurch gekennzeichnet, daß die Modulatoren (6, 6') als Phasenmodulatoren ausgebildet sind, an denen jeweils das empfangene Signal und das Datensignal (i₁(t), i₂(t)) ansteht.

7. Kommunikationssystem nach einem der Ansprüche 1 bis 6, dadurch gekennzeichnet, daß die Modulatoren Einseitenbandmodulatoren (6, 6') sind.

8. Kommunikationssystem nach Anspruch 7, dadurch gekennzeichnet, daß als Einseitenbandmodulator (6) eine Serienschaltung einer λ/8- und einer λ/4-Verzögerungsschaltung (7, 8) an den Fußpunkt der zugehörigen Antenne (5) angeschlossen ist, wobei parallel zu der λ/8-Verzögerungsschaltung (7) eine erste Diode (10) und parallel zu der λ/4-Verzögerungsschaltung (8) eine zweite Diode (12) in Serie zu der ersten Diode (10) geschaltet ist und beide Dioden (10, 12) mit jeweils einem Modulationssignal i₁(t), i₂(t) in den leitenden und sperrenden Zustand schaltbar sind.
